# EUROPÄISCHE PATENTANMELDUNG

(11) **EP 0 684 077 A1**
(43) Veröffentlichungstag der Anmeldung: **29.11.1995**
(21) Anmeldenummer: 95106404.7
(22) Anmeldetag: 28.04.1995
(51) Int. Cl.: B03B 5/48, B03B 5/28, B09C 1/02, B01D 21/00

(54) **Reinigungseinrichtung für Sand, mit Gaseinleitung im unteren Bereich**

(30) Priorität: 28.05.1994 DE 4418758
(71) Anmelder: ECOTECHNIEK BV, NL-3606 AZ Maarsen (NL)
(72) Erfinder: Pos, Jacobus, NL-7141 VE Groenlo (NL)
(74) Vertreter: Habbel, Hans-Georg, Dipl.-Ing.

(57) **Zusammenfassung**

Bei einer Reinigungseinrichtung (5) für Sand, mit einem Behälter (6), der einen Zulauf für eine Wasser/Sand-Suspension aufweist, sowie einen Reinwasser-Ablauf, sowie mit in dem Behälter (6) angeordneten Lamellen (7), die wellenartig konvexe und konkave Bereiche aufweisen, sowie mit einer Förderschnecke (12) im Behältertiefsten, schlägt die Erfindung vor, daß für die Einleitung von Gas in die Sinkstoffe Belüftungsdüsen (14) im Bereich der Förderschnecke (12) angeordnet sind.

## Beschreibung

Die Erfindung betrifft eine Reinigungseinrichtung nach dem Oberbegriff des Anspruchs 1.

Eine derartige Reinigungseinrichtung ist beispielsweise aus der DE 40 27 879 A1 bekannt.

Durch zunehmend stärkere Verschmutzungen der Böden einerseits und durch zunehmend höhere Anforderungen an die Reinheit aufbereiteter Sande andererseits liegt der Erfindung die Aufgabe zugrunde, eine gattungsgemäße Einrichtung dahingehend zu verbessern, daß neben einer guten Klärung des Wassers auch die Sandanteile, also die ausgeschiedenen Sinkstoffe, möglichst gut gereinigt werden sollen. Weiterhin liegt der Erfindung die Aufgabe zugrunde, ein Verfahren vorzuschlagen, mit dem eine derart gute Reinigung möglich ist.

Diese der Erfindung zugrundeliegende Aufgabe wird durch die Ausgestaltung einer Reinigungsvorrichtung gemäß den kennzeichnenden Merkmalen des Anspruchs 1 und durch ein Verfahren nach Anspruch 10 gelöst.

Die Erfindung schlägt mit anderen Worten vor, die Sinkstoffe, die sich im Behältertiefsten im Bereich der Förderschnecke angesammelt haben, mit Luft oder einem anderen Gas zu belüften. Hierdurch wird im Bereich des Behältertiefsten folgende Behandlung des Sandes bewirkt:
Zunächst werden die Sinkstoffe, also einzelne Sandkörner, dadurch gewaschen, daß sie im Kontakt mit dem umgebenden Wasser sind. Das Waschen kann sowohl durch chemische Lösung der Verunreinigungen von Sandkörnern erfolgen als auch durch die Flüssigkeitsreibung zwischen den Sandkörnern und dem umgebenden Wasser. Die Sandkörner werden zweitens gescheuert. Einerseits geschieht diese Scheuerwirkung durch den reibenden Kontakt der Sandkörner untereinander, wenn sie durch die Förderschnecke in Bewegung gehalten werden. Andererseits erfolgt ein Scheuern der Sandkörner an Bauteilen des Behälters, beispielsweise an der Behälterwandung oder an der Förderschnecke. Durch die Scheuerwirkung wird ein mechanisches Ablösen der Verunreinigungen von den Sandkörnern bewirkt. Schließlich erfolgt durch das Einleiten von Gas eine Reinigung der Sandkörner dadurch, daß abgelöste Verunreinigungen zusammen mit den aufsteigenden Gasbläschen abtransportiert werden. Die Gasbläschen können dabei als Mikrobläschen oder als größere Gasblasen eingeleitet werden und bewirken neben der geschilderten Reinigungswirkung eine weitere Bewegung der Sandkörner, so daß die Scheuerwirkung unterstützt wird.

Vorteilhaft können die Belüftungsdüsen im Behältertiefsten, also unterhalb der Förderschnecke angeordnet sein, so daß die Gasbläschen eine möglichst lange Strecke durch die Sinkstoffe zurücklegen und dadurch eine besonders gute Reinigungswirkung entfalten können. Wenn die Förderschnecke in einem Förderkanal angeordnet ist, der am Behältertiefsten ausgebildet ist, so kann die Einleitung des Belüftungsgases ggf. auch über den Umfang des Förderkanals verteilt vorgesehen sein oder ggf. nur seitlich erfolgen, wenn hierdurch eine ausreichende Belüftung der Sinkstoffe erzielt werden kann.

Weitere vorteilhafte Ausgestaltungen der Erfindung sind den Unteransprüchen 3 bis 9 entnehmbar.

Das erfindungsgemäße Verfahren vereinigt die Vorteile der oben geschilderten dreifachen Behandlung der im Behältertiefsten angesammelten Sinkstoffe, so daß hierdurch die gewünschte intensive Reinigung dieser Sinkstoffe erzielt wird.

Ein Ausführungsbeispiel der Erfindung wird anhand der Zeichnung im folgenden näher erläutert.

Dabei zeigt
Fig. 1 eine schematische Anordnung einer erfindungsgemäßen Reinigungseinrichtung,
Fig. 2 eine Seitenansicht auf das Zulaufende der Reinigungseinrichtung,
Fig. 3 eine stirnseitige Ansicht auf das Ablaufende der Einrichtung von Fig. 1,
Fig. 4 eine Draufsicht auf die Einrichtung gemäß Fig. 1 und
Fig. 5 einen Schnitt gemäß der Linie A - A in Fig. 4.

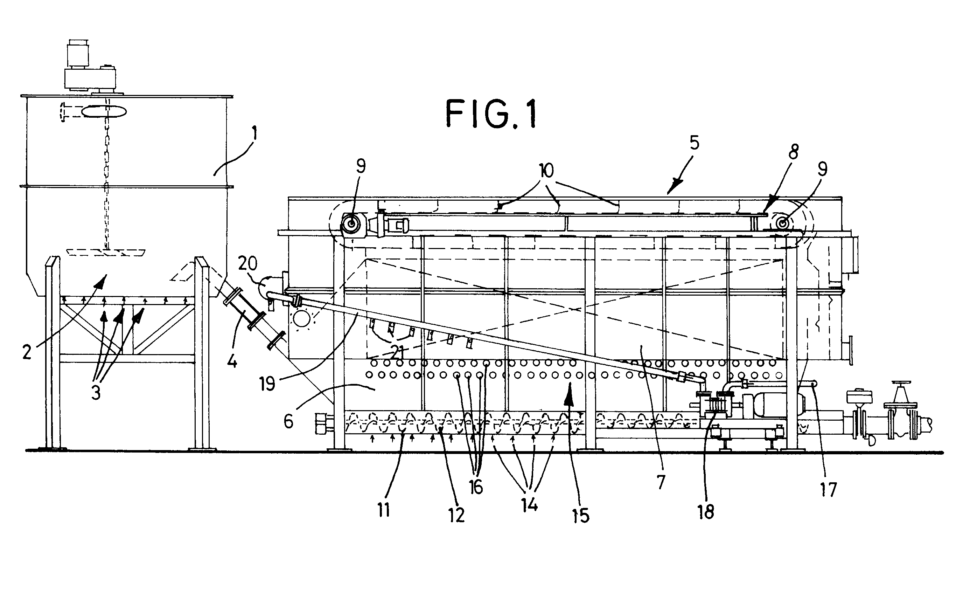

In Fig. 1 ist eine Anlage dargestellt, die zur Reinigung von Sand, beispielsweise aus Bauschutt dient. Der Sand wird zunächst einem Vorbehälter 1 zugeführt und dort in Wasser suspendiert. Eine Rührvorrichtung 2 dient dazu, den Sand in der Suspension zu halten und zu verwirbeln. Die Verwirbelung sowie der Austrag von flüchtigen Verunreinigungen kann durch das Einleiten von Gas, beispielsweise von Luft, unterstützt werden, die über schematisch angedeutete Belüftungsöffnungen 3 durch den Boden des Vorbehälters 1 in die Wasser/Sand-Suspension eingeleitet werden kann.

Luft-Wasser-Gemisch wird dem Vorbehälter 1 über eine Entnahmeleitung 4 entnommen und einer Reinigungseinrichtung 5 zugeführt, die erfindungsgemäß ausgebildet ist.

Die Entnahmeleitung 4 ist an den Schmutzwasser-Zulauf eines Behälters 6 angeschlossen, in dem senkrecht angeordnete Lamellen 7 mit horizontal verlaufenden Strömungskanälen, d. h. mit horizontal verlaufenden konvexen Bereichen und konkaven Bereichen angeordnet sind. Die Lamellen 7 erstrecken sich nahezu über die gesamte Distanz zwischen dem Schmutzwasserzulauf und dem Reinwasserablauf, wobei die Lamellen in Strömungsrichtung des Wassers verlaufen.

Durch die große Länge der Lamellen 7 wird bewirkt, daß abhängig von der Packungsdichte der Lamellen und der Strömungsgeschwindigkeit des Wassers spätestens im hinteren Bereich der Lamellen 7 eine laminare turbulenzfreie Strömung des Wassers erreicht wird, in der einerseits Schwebstoffe ungehindert aufsteigen können und andererseits Sinkstoffe auch geringen spezifischen Gewichts ungehindert absinken können. Durch die wellig ausgebildeten Lamellen 7 werden für absinkende Stoffe insgesamt eine Vielzahl von Absetzflächen geschaffen und auf diese Weise sehr kurze Absetzwege geschaffen, so daß auch bei langsamen Sinkgeschwindigkeiten im Verhältnis zur Strömungsgeschwindigkeit des Wassers ein Absinken und Absetzen auch kleinster Sinkstoffe auf den Lamellen unterstützt wird, wo sich diese Sinkstoffe mit anderen kleinsten Partikeln zusammenballen können und dann abschließend nach unten in das Behältertiefste absinken können.

Aufsteigende Verunreinigungen können in an sich bekannter Weise über eine Kratzeinrichtung 8 abgezogen werden, welche um zwei voneinander entfernte Drehachsen 9 umläuft und eine Vielzahl von Kratzleisten 10 zur Erfassung der aufschwimmenden Verunreinigungen aufweist.

In Abwandlung des dargestellten Ausführungsbeispiels können die Lamellen 7 auch aus mehreren in Strömungsrichtung des Wassers hintereinander angeordneten Lamellenpaketen ausgebildet sein. Dabei können die unterschiedlichen Lamellenpakete unterschiedlich schrägstehende Lamellen aufweisen oder Lamellen mit unterschiedlich verlaufenden konvexen und konkaven Bereichen. Auf diese Weise können in unterschiedlichen Strömungszonen des Behälters 6 die Lamellen optimal an die Absinkgeschwindigkeiten von Partikeln mit unterschiedlichen Korndurchmessern angepaßt werden und insgesamt eine möglichst hohe Sandabscheidung aus dem Schmutzwasser ermöglichen.

Absinkende Stoffe sammeln sich im Bereich des Behältertiefsten in einem Förderkanal 11, der sich über die gesamte Länge des Behälters 6 erstreckt und in welchem eine Förderschnecke 12 angeordnet ist. Die Förderschnecke 12 dient dazu, anfallende Sinkstoffe aus dem Behälter 6 abzufördern. Sie bewirkt weiterhin eine mechanische Durchwirbelung der Sinkstoffe. Auf diese Weise werden die Sinkstoffe einerseits durch das umgebende Wasser gewaschen, andererseits durch die Reibung untereinander und durch die Reibung mit Bauteilen des Behälters 6 gescheuert und gerieben, wodurch auf mechanische Weise anhaftende Verunreinigungen von den Sandkörnern entfernt werden.

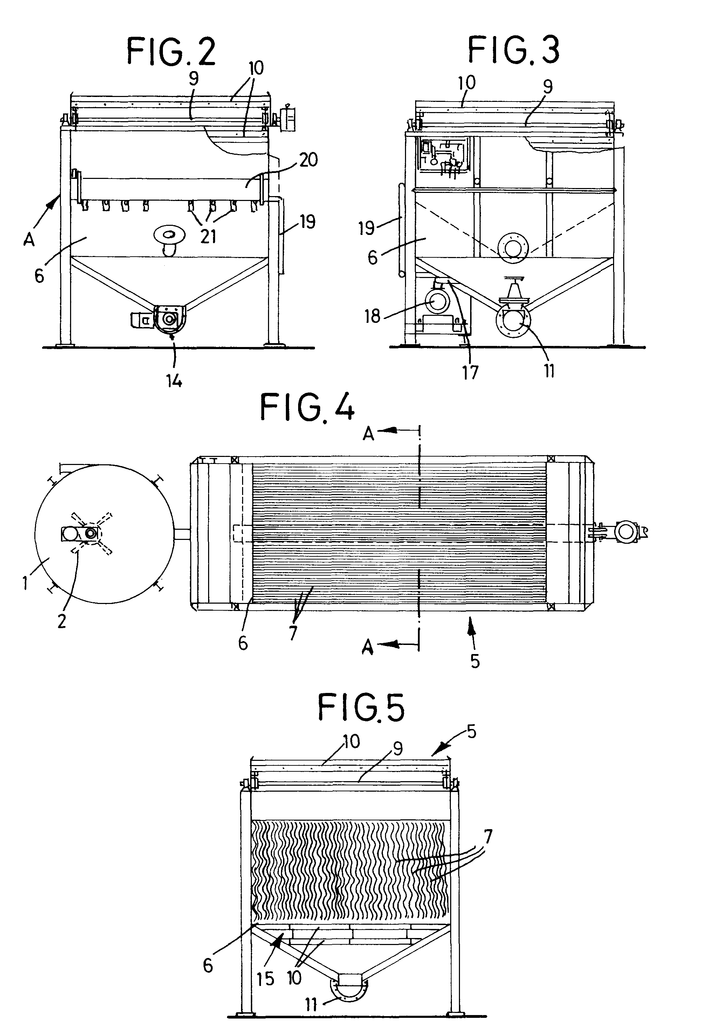

Im tiefsten Bereich des Förderkanals 11 sind in Fig. 1 sowie Fig. 2 schematisch angedeutete Belüftungsdüsen 14 erkennbar, durch die Luft oder ein anderes geeignetes Gas in den Förderkanal 11 eingeblasen werden kann. Das Gas kann dabei in Form von Mikrobläschen oder von gröberen Blasen eingedüst werden und bewirkt eine dritte Form der Behandlung der Sinkstoffe im Behältertiefsten: Die Gasbläschen nehmen die bereits abgelösten Verunreinigungen zwischen den Sandkörnern auf und transportieren sie nach oben, zwischen den Lamellen 7 hindurch, wo diese Verunreinigungen durch die Kratzeinrichtung 8 entfernt werden können.

Die Belüftungsdüsen 14 können vorteilhaft über der gesamten Länge des Förderkanals 11 vorgesehen sein, wobei eine gruppenweise oder individuelle Ansteuerung der Belüftungsdüsen 14 vorteilhaft sein kann, um gewisse Bereiche des Förderkanals 12 nicht zu bedüsen. Auf diese Weise können besonders ruhige Strömungsverhältnisse zwischen den Lamellen dort eingestellt werden, wo dieses gewünscht ist.

Abweichend von dem dargestellten Ausführungsbeispiel können die Belüftungsdüsen nicht nur von unten, sondern beispielsweise auch seitlich in den Förderkanal 11 eindüsen oder, wenn kein Förderkanal 11 vorgesehen ist, in die entsprechende Zone des Behältertiefsten.

Zwischen dem Förderkanal 11 und den Lamellen 7 ist ein Verteiler 15 für die aufsteigenden Gasbläschen und Verunreinigungen vorgesehen. Der Verteiler 15 soll einerseits zu einer Vergleichmäßigung der aufsteigenden Stoffe über den Behälterquerschnitt sorgen und andererseits die Aufstiegsgeschwindigkeit dieser Stoffe bremsen, um so zwischen den Lamellen 7 möglichst ruhige Strömungsverhältnisse einzustellen.

Der Verteiler 15 besteht aus einer Vielzahl von einzelnen Streben 16, die in zwei Ebenen übereinander angeordnet sind, wobei jede Ebene durch eine Vielzahl von Streben 16 gebildet wird, die im Abstand voneinander angeordnet sind. Innerhalb der beiden Ebenen haben die Streben 16 jeweils den gleichen Abstand voneinander. Die beiden Ebenen jedoch sind versetzt zueinander angeordnet, so daß sich insgesamt S-förmig gewundene Durchlässe für die aufsteigenden Stoffe durch den Verteiler 15 ergeben.

Die Streben 16 einer der beiden Ebenen des Verteilers 15 können vorteilhaft höhenverstellbar gelagert sein, so daß insgesamt die eine Ebene zu der anderen Ebene des Verteilers 15 angenähert oder von dieser anderen Ebene entfernt werden kann. Auf diese Weise können die freien Strömungsquerschnitte zwischen den Streben 16 des Verteilers 15 vergrößert oder verringert werden, um die strömungsbremsende Wirkung des Verteilers 15 zu beeinflussen, beispielsweise in Anpassung an die Größe der eingedüsten Luftbläschen.

Im dargestellten Ausführungsbeispiel sind die Streben 16 mit einem runden Querschnitt dargestellt. Vorteilhaft ist eine gebogene oder dachartig abgewinkelte oder schrägstehend verlaufende Oberseite der Streben 16, damit Sinkstoffe, die aus den Lamellen 7 zum Behältertiefsten absinken, sich in möglichst geringem Maße auf den Streben 16 ablagern können. Durch die beschriebene Ausbildung der Oberseite der Streben 16 wird die konstruktiv vorgesehene Wirkung des Verteilers 15 optimal erhalten, ohne durch Ablagerungen beeinflußt zu werden.

Teilweise gereinigtes Wasser kann durch eine Rückleitung 17 am Ende des Behälters 6 entnommen werden und mit Hilfe einer Pumpe 18 über eine Steigleitung 19 in ein Einspeiserohr 20 gefördert werden kann. Sowohl in der Steigleitung 19 als auch im Einspeiserohr 20 sind Anschlüsse 21 vorgesehen, wobei durch die Anschlüsse 21 Gase in das Wasser eingeleitet werden können und/oder Chemikalien, beispielsweise Flockungsmittel. Vom Einspeiserohr 20 gelangt das so behandelte Wasser wiederum in den Behälter 6, dadurch daß ein Teil der Wassermenge im Kreislauf geführt und zusätzlich behandelt werden kann, kann die Reinigungswirkung der gesamten Anlage und insbesondere der Reinigungseinrichtung 5 erhöht werden.

## Patentansprüche

1. Reinigungseinrichtung für Sand, mit einem Behälter, der einen Zulauf für eine Wasser/Sand-Suspension aufweist, sowie einen ReinwasserAblauf, sowie mit in dem Behälter angeordneten Lamellen, die wellenartig konvexe und konkave Bereiche aufweisen, sowie mit einer Förderschnecke im Behältertiefsten, dadurch gekennzeichnet, daß für die Einleitung von Gas in die Sinkstoffe Belüftungsdüsen (14) im Bereich der Förderschnecke (12) angeordnet sind.

2. Einrichtung nach Anspruch 1, dadurch gekennzeichnet, daß die Belüftungsdüsen (14) in einen Förderkanal (11) münden, in dem die Förderschnecke (12) angeordnet ist.

3. Einrichtung nach Anspruch 1 oder 2, gekennzeichnet durch einen Verteiler (15) für aus dem Behältertiefsten aufsteigende Schwebstoffe, wobei der Verteiler (15) eine Vielzahl von Durchlässen für die Schwebstoffe aufweist und zwischen der Förderschnecke (12) und den Lamellen (7) angeordnet ist.

4. Einrichtung nach Anspruch 3, dadurch gekennzeichnet, daß die Größe der Durchlässe einstellbar ist.

5. Einrichtung nach Anspruch 4, gekennzeichnet durch in zwei oder mehreren Ebenen übereinander angeordnete Reihen von Streben (16), wobei die Streben (16) jeder Ebene im Abstand voneinander angeordnet sind und wobei die Streben (16) benachbarter Ebenen versetzt zueinander angeordnet sind und wobei die Streben (16) wenigstens einer Reihe in der Höhe einstellbar gelagert sind.

6. Einrichtung nach einem der Ansprüche 3 bis 5, dadurch gekennzeichnet, daß die Oberseite der Streben (16) kuppenförmig oder dachförmig ausgebildet ist.

7. Einrichtung nach einem der vorhergehenden Ansprüche, dadurch gekennzeichnet, daß die Lamellen (7) sich in der Richtung des Wasserstroms vom Zulauf zum Ablauf erstrecken und sich über im wesentlichen die gesamte Distanz im Behälter (6) zwischen Zulauf und Ablauf erstrecken.

8. Einrichtung nach Anspruch 7, dadurch gekennzeichnet, daß die Lamellen (7) im wesentlichen senkrecht angeordnet sind, wobei die konvexen bzw. konkaven Bereiche horizontal verlaufen.

9. Einrichtung nach Anspruch 7, dadurch gekennzeichnet, daß über die Behälterlänge mehrere Lamellenpakete mit unterschiedlicher Neigung oder unterschiedlich verlaufenden konvexen und konkaven Bereichen hintereinander angeordnet sind.

10. Verfahren zur Reinigung von Sand unter Verwendung einer Einrichtung nach einem der Ansprüche 1 bis 9, dadurch gekennzeichnet, daß der Sand zunächst in Wasser suspendiert und verwirbelt wird, anschließend die Suspension in den Behälter (6) geleitet wird, wo die Sinkstoffe des Sandes durch das Wasser gewaschen, durch Reibung miteinander sowie an Bauteilen des Behälters (6) gescheuert, und schließlich durch die Einleitung von Gas von Verunreinigungen befreit werden, die von den Sandkörnern abgelöst sind.
